# FASCICULE DE BREVET EUROPEEN

(11) **EP 0 704 162 B1**
(45) Date de publication et mention de la délivrance du brevet: **16.08.2000**
(21) Numéro de dépôt: 95402191.1
(22) Date de dépôt: 29.09.1995
(51) Int. Cl.: A23B 7/022, A23L 3/42

(54) **Végétaux stockables à températures basses positives et négatives et procédé de conservation de végétaux frais**
Bei niedriger (Plus- und Minus-) Temperatur lagerfähiges pflanzliches Produkt und Verfahren zur Konservierung von frischen pflanzlichen Produkten
Vegetable products storable at low above and below temperatures and process for preserving fresh vegetables

(30) Priorité: 29.09.1994 FR 9411654
(43) Date de publication de la demande: 03.04.1996
(73) Titulaire: SOCIETE DE DEVELOPPEMENT DE L'INDUSTRIE, AGRO-ALIMENTAIRE ET DE PEPINIERE EUROPEEENE - SODIAPE, F-77167 Bagneaux sur Loing (FR)
(72) Inventeur: Darbonne, Luc, F-91490 Oncy sur Ecole (FR)
(74) Mandataire: Derambure, Christian

(56) Documents cités:
- EP-A- 0 407 299
- EP-A- 0 431 703
- EP-A- 0 446 147
- WO-A-92/10946
- WO-A-94/13156
- FR-A- 2 638 062
- GB-A- 2 053 656

## Description

La présente invention concerne des produits végétaux, notamment des herbes ou plantes aromatiques stockables indifféremment à températures basse positive et négative, ces produits végétaux conservant leur goût, arôme, couleur, texture et souplesse. Elle concerne également un procédé de traitement de végétaux fraîchement récoltés et plus spécifiquement d'herbes ou plantes aromatiques en vue de l'obtention de tels produits végétaux.

Les végétaux fraîchement récoltés ne sont pour la plupart disponibles qu'à des saisons précises et dans un périmètre géographique limité. Leur durée de conservation est réduite et ce, particulièrement lorsqu'ils sont découpés pour être prêts à l'emploi. Ils sont sujets à des dégradations microbiologiques, à des altérations d'arômes et de couleurs très rapides, dues principalement aux enzymes. Ils se flétrissent et leur texture se modifie.

Egalement, ces végétaux prêts à l'emploi sont susceptibles de prendre en masse du fait de leur teneur en eau importante.

Pour pallier ces inconvénients, différents modes de conservation ont été mis au point pour disposer de végétaux prêts à l'emploi toute l'année tout en essayant de conserver certaines de leurs propriétés. Outre les techniques traditionnelles, depuis quelques années se sont développés de nombreux procédés pour la conservation et le stockage des produits végétaux pour de courtes et longues durées.

On peut se référer, par exemple, au document : FR-A-2 629 104 qui décrit une déshydratation complète par air chaud de produits alimentaires ; US-A-3 188 750 qui décrit une technique de séchage combinant une lyophilisation et une déshydratation à chaud pour obtenir un produit hautement déshydraté ; WO 86/ 01686 qui décrit un procédé d'obtention d'un végétal à humidité intermédiaire conditionné sous atmosphère contrôlée pour pouvoir être stocké au congélateur ; FR-A-2 638 062 qui décrit un procédé de déshydratation à air chaud et sous vide.

Cependant, tous les végétaux obtenus à l'aide de ces techniques antérieures posent certains problèmes ou ont certaines limites notamment d'utilisation.

Ainsi, les végétaux surgelés sous forme individuelle ont le goût, la couleur et l'arôme des végétaux frais mais doivent être conservés gelés à température négative, température à laquelle ils sont cassants et friables. Dès qu'ils sont à température positive, ils subissent des détériorations enzymatiques très rapidement, dont le résultat est la perte de fraîcheur et le développement de mauvais goûts et odeurs et des modifications de couleur. De plus, des exsudats, une prise en masse et un ramollissement apparaissent.

Les végétaux déshydratés à l'air chaud ont comme inconvénients majeurs d'avoir perdu leur qualité gustative. Ainsi pour la plupart un goût de foin apparaît et l'arôme est sensiblement inexistant. Les couleurs sont très altérées et inattractives et ce d'autant plus que le végétal est sensible aux oxydations enzymatiques et à la chaleur. La structure des végétaux est dénaturée par éclatement cellulaire et la forme est contractée (perte de volume). Enfin, ils possèdent des propriétés mécaniques non satisfaisantes, ils s'émiettent, au moins en partie sous l'action des inévitables forces de frottement qui se manifestent lors de leur manipulation pour donner une poudre non souhaitable dans beaucoup de préparations culinaires.

Bien que les végétaux lyophilisés aient un volume apparent peu réduit et qu'ils ne subissent pas de dégradations enzymatiques lors de leur déshydratation, on retrouve chez eux les autres inconvénients metionnés ci-dessus pour les produits déshydratés.

En outre, les durées de séchage sont très importantes et engendrent une consommation d'énergie excessive et onéreuse.

L'invention a donc tout d'abord pour objet un procédé de traitement de végétaux fraîchement récoltés (notamment d'herbes ou plantes aromatiques) surmontant les problèmes ou limites mentionnés précédemment.

Plus particulièrement, un objet de la présente invention est de proposer un procédé de traitement de végétaux fraîchement récoltés dans lequel les végétaux ne sont pas abîmés, meurtris, écrasés.

Un autre objet de la présente invention est de proposer un produit végétal prêt à l'emploi - c'est-à-dire qui ne nécessite pas une réhydratation préalable à son utilisation -, qui ne nécessite pas une découpe ultérieure, qui puisse être stocké plusieurs jours à température positive basse, sans prendre en masse, sans exsuder, sans coller, sans ramollir.

Un autre objet de la présente invention est de proposer un produit végétal prêt à l'emploi, qui garde de façon durable sa structure, sa couleur, sa texture, son arôme et son goût.

Un autre objet de la présente invention est de proposer un produit végétal dont l'aspect est proche du frais, différent du surgelé, du déshydraté et du lyophilisé.

Un autre objet de la présente invention est de proposer un produit végétal dont l'utilisation est identique à celle d'un produit végétal frais.

Un autre objet de la présente invention est de proposer un produit végétal qui garde les propriétés citées ci-dessus à des températures supérieure et inférieure à 0°C, lui permettant d'être stocké indifféremment à des températures basses positives ou négatives et donc au réfrigérateur ou au congélateur.

Un autre objet de la présente invention est de proposer un produit végétal qui puisse être stocké jusqu'à trente jours uniquement aux températures de réfrigération, ou jusqu'à quatre ans aux températures négatives de conservation des produits surgelés ou en combinaison de stockage jusqu'à quatre ans aux températures négatives de conservation des produits surgelés puis jusqu'à trente jours aux températures de réfrigération.

A cet effet, l'invention concerne un procédé de traitement de végétaux fraîchement récoltés notamment d'herbes ou plantes aromatiques, caractérisé en ce qu'il comprend les étapes consistant à :
a) ajouter et mélanger à des morceaux consommables de végétaux des dépresseurs d'activité d'eau ;
b) congeler le mélange ainsi obtenu ;
c) extraire du mélange une quantité d'eau globale déterminée par sublimation en interrompant le processus en cours de dessiccation primaire ou au tout début de dessiccation secondaire, le mélange étant susceptible de présenter des morceaux de végétaux secs et/ou des morceaux de végétaux encore gelés ou plus ou moins humides ;
d) mélanger, de façon homogène, le mélange de morceaux de végétaux ainsi obtenu pour permettre une migration d'eau des morceaux gelés vers les morceaux plus ou moins humides et/ou vers les morceaux secs ;
e) recueillir les végétaux ainsi obtenus prêts à l'emploi, leur aspect, leur arôme, leur goût, leur couleur, leur souplesse étant équivalentes ou proches des végétaux frais.

De façon surprenante, ce procédé de traitement permet d'obtenir un produit végétal qui présente les propriétés des végétaux frais. En effet, la sublimation préserve au mieux les propriétés de structure et évite toute altération enzymatique et est insuffisante pour entraîner les complexes aromatiques. De plus, grâce à l'action combinée d'une teneur en eau réduite et des dépresseurs d'activité d'eau, ces propriétés sont conservées lors d'un stockage aussi bien aux températures de conservation des produits surgelés qu'aux températures de réfrigération. Ces propriétés sont notamment les propriétés organoleptiques : goût et odeur (démontré par la mesure de la teneur en huiles essentielles et par un jury de dégustation) et les propriétés colorimétriques : couleur (démontré par des mesures colorimétriques).

La réduction du taux d'humidité évite, lors d'un stockage aux températures de réfrigération, l'exsudation, la prise en masse, le collage, le ramollissement des végétaux. Le taux d'humidité reste suffisant pour donner au végétal un aspect humide similaire aux végétaux frais.

L'invention concerne également un produit végétal, notamment une herbe ou plante aromatique, auquel ont été ajoutés des dépresseurs d'activité d'eau du type sels minéraux et/ou glucides et lequel a subi, après congélation, une extraction d'eau de manière qu'il présente une activité de l'eau à 20°C, une teneur en sels minéraux, une teneur en glucides et une teneur en humidité se situant dans un intervalle tel que ledit produit conserve les propriétés des végétaux frais ou s'en rapproche, notamment en ce qui concerne sa texture, sa souplesse et ses propriétés organoleptiques et colorimétriques et qu'il puisse être stocké indifféremment à des températures basses positives et négatives.

D'autres caractéristiques et avantages de la présente invention apparaîtront clairement à la lecture de la description qui suit.

L'invention se rapporte à un procédé de traitement de végétaux fraîchement récoltés et notamment d'herbes ou plantes aromatiques. A titre non limitatif, les végétaux susceptibles d'être traités par le procédé de la présente invention sont l'aneth, le basilic, le céleri, le cerfeuil, la coriandre, le cresson, l'épinard, l'estragon, la livèche, la marjolaine, la menthe, l'oseille, le persil, le romarin, la sarriette, le thym, la sauge, l'origan, la lavande, la ciboulette, l'ail, l'échalote, l'oignon, la courgette, le poireau, le haricot, le poivron, etc..

Le procédé conforme à la présente invention comprend essentiellement quatre étapes.

La première consiste à ajouter et mélanger à des morceaux consommables de végétaux des dépresseurs d'activité d'eau.

Dans la présente invention, le mot "morceaux" englobe également la variante constituée du cas où l'on est en présence d'un mélange de plusieurs végétaux homogènes.

Selon l'invention, il est également possible de congeler préalablement les morceaux consommables de végétaux. Cette congélation peut être effectuée à l'aide de techniques connues comme le passage dans une chambre froide ou un tunnel de surgélation, l'utilisation d'azote liquide ou d'une enceinte de lyophilisateur.

Les dépresseurs d'activité d'eau peuvent être liquides ou solides.

Dans ce dernier cas, la température d'ajout des dépresseurs d'activité d'eau est celle nécessaire à leur solubilisation par migration de l'eau à l'extérieur de la structure végétale. En l'occurrence, elle est comprise entre une température négative et une température basse positive. De préférence, elle est comprise entre -40°C et 30°C, notamment entre -8°C et 10°C.

La quantité de dépresseurs d'activité d'eau ajoutée et mélangée au produit végétal à traiter est telle que le végétal obtenu à la fin du procédé conforme à la présente invention ait une composition comprenant entre 30 % et 55 % d'eau, entre 8 % et 55 % de dépresseurs d'activité d'eau et une activité de l'eau à 20°C comprise entre 0,60 et 0,80 de préférence entre 0,70 et 0,75.

Selon un mode préféré de réalisation de l'invention, la quantité et la nature des dépresseurs d'activité d'eau sont choisies de manière à ce que les végétaux obtenus aient une teneur de l'ordre de 8 à 30 % en sels minéraux et une teneur de l'ordre de 5 à 25 % en glucides.

Quant à la nature des dépresseurs d'activité d'eau, elle est intimement liée à la nature du produit végétal traité. Ces dépresseurs d'activité d'eau peuvent être choisis dans le groupe comprenant : les sels minéraux et notamment le chlorure de sodium, le chlorure de calcium, le chlorure de potassium, le citrate de sodium, les carbonates et sulfates alimentaires ; les mono, di, oligosaccharides et notamment le glucose, le fructose, le saccharose, le lactose, le maltose, les maltodextrines, les sirops de glucose ; les polyols et notamment le sorbitol et le glycérol ; les protéines et les hydrolysats de protéines ; et les acides organiques et/ou leurs sels.

La seconde étape du procédé conforme à l'invention consiste à congeler le mélange constitué des morceaux consommables de végétaux et des dépresseurs d'activité d'eau. Dans le cas où l'on part, dans le procédé de la présente invention, de morceaux de végétaux congelés, cette étape n'a évidemment pas lieu d'être.

Cette congélation peut être effectuée à l'aide de techniques connues, comme l'utilisation d'une chambre froide, d'un tunnel de surgélation, d'azote liquide ou même d'une enceinte d'un lyophilisateur.

L'étape suivante du procédé conforme à l'invention consiste à extraire, du mélange congelé, une quantité d'eau déterminée. Cette extraction se fait par sublimation avec maintien de la fraction d'eau restante sous forme de glace ou sous forme liée.

Cette sublimation est effectuée préférentiellement dans un lyophilisateur pour lequel les conditions opératoires sont à titre illustratif les suivantes :
- température de congélation : de l'ordre de -20°C à -40°C,
- vide inférieur à 4 mmHg,
- apport de calories, compte tenu que la sublimation est une réaction endothermique : support du produit chauffé entre 10°C et 80°C après la mise sous vide.

Selon une caractéristique importante de l'invention, on interrompt la sublimation en cours de dessiccation primaire ou au tout début de dessiccation secondaire, le mélange étant susceptible de présenter des morceaux de végétaux secs et/ou des morceaux de végétaux encore gelés ou plus ou moins humides.

On obtient un tel résultat, notamment lorsqu'on interrompt la sublimation à un temps t déterminé pour que le mélange ait globalement une teneur en eau de 30 à 55 %. Ce temps t est inférieur au moins de moitié, pour un produit donné, à une sublimation suivi d'une dessiccation secondaire classiques, d'où une diminution du coût énergétique importante et des rendements améliorés.

La quatrième étape du procédé conforme à la présente invention consiste à mélanger de façon homogène le mélange de morceaux de végétaux obtenu lors de l'étape précédente. Un tel mélange permet aux morceaux gelés ou plus ou moins humides d'être mis en contact avec les morceaux secs et permet ainsi une migration d'eau entre les morceaux, migration nécessaire pour obtenir une composition et une teneur en eau identiques entre morceaux. Cette migration s'effectue à une température positive ou négative, à savoir supérieure ou égale à -20°C.

On recueille ensuite les végétaux ainsi traités. Ces derniers sont prêts à l'emploi c'est-à-dire qu'ils n'ont pas besoin d'une réhydratation préalable avant leur utilisation.

Ils peuvent donc être saupoudrés directement et apporter par exemple une partie de l'assaisonnement d'un plat cuisiné. Contrairement aux procédés traditionnels de déshydratation, la teneur en huile essentielle des produits végétaux traités est réduite au plus de 30 % par rapport à la matière sèche du produit végétal frais.

Ils présentent surtout l'avantage primordial de pouvoir être stockés indifféremment à des températures basses positives et à des températures négatives et donc indifféremment aux températures de conservation des produits surgelés et/ou aux températures de réfrigération.

Le procédé conforme à la présente invention est soit continu, soit discontinu. Dans ce cas il comprend une étape de stockage à une température inférieure ou égale à -18°C avant l'étape de sublimation mentionnée ci-dessus.

Il est également possible d'ajouter inialement aux végétaux fraîchement récoltés à traiter (qui sont éventuellement surgelés par la suite) des aromatisants et/ou des amidons et/ou des exhausteurs de goût.

Il est possible de blanchir les végétaux frais ou d'utiliser des végétaux surgelés préalablement blanchis.

L'invention concerne également un produit végétal et notamment une herbe ou plante aromatique auquel ont été ajoutés des dépresseurs d'activité d'eau du type sels minéraux et/ou glucides et lequel a subi, après congélation, une extraction d'eau par sublimation interrompue à un temps t déterminé de manière qu'il présente une activité de l'eau à 20°C, une teneur en sels minéraux , une teneur en glucides et une teneur en humidité se situant dans un intervalle tel que ledit produit conserve les propriétés de végétaux frais ou s'en rapproche, notamment en ce qui concerne sa texture, sa souplesse et ses propriétés organoleptiques et colorimétriques et qu'il puisse être stocké indifféremment à des températures basses positive et négative.

Avantageusement, l'activité de l'eau à 20°C est compris entre 0,60 et 0,80°C de préférence entre 0,70 et 0,75 ; ladite teneur en sels minéraux est comprise entre 8 % et 30 %; ladite teneur en glucides est comprise entre 5 % et 25 % et ladite teneur en humidité est comprise entre 30 % et 55 %.

Les dépresseurs d'activité d'eau sont choisis dans le groupe mentionné ci-dessus.

Le produit végétal conforme à la présente invention peut comprendre également des aromatisants et/ou des amidons et/ou des exhausteurs de goût.

Sa température de stockage est comprise entre -40°C et 12°C, notamment entre -18°C et 6°C.

L'invention sera maintenant décrite à l'aide d'exemples donnés à titre indicatif et nullement limitatif.

### Exemple n° 1 :

600 g de flocons (à 8 % de matière sèche) de basilic surgelé (selon le procédé décrit dans le document FR-B-2 665 612) à -20°C sont mélangés à 32,14 g de chlorure de sodium et à 16,20 g de saccharose. Les produits sont intimement mélangés pendant 8 minutes, temps durant lequel les cristaux de sel et de sucre se dissolvent dans l'eau extraite à la surface des flocons de basilic. Le mélange est ensuite disposé sur les plateaux d'un lyophilisateur et immédiatement gelé à -30°C. Le vide est ensuite maintenu à 8.10⁻² mbar et les plateaux chauffés à 25°C. Après 5 heures de sublimation de l'eau du basilic, la teneur en eau globale du lot est de 41,5 %. Après homogénéisation rapide par mélange, le lot est conservé 14 jours à + 12°C. Le goût, l'odeur et la couleur sont inchangés, un jury de dégustateurs de 10 personnes (selon la norme NF V09-013) ne perçoit pas de différence significative entre le jour de mise au réfrigérateur et le quatorzième jour.

### Exemple n° 2 :

600 g de persil (à 12 % de matière sèche), surgelés en morceaux à -20°C sont mélangés à 44,4 g de chlorure de sodium et à 22,2 g de saccharose.

Les produits sont mélangés intimement pendant 10 mn puis conservés 2 jours en chambre froide avant d'être disposés dans le lyophilisateur. Le vide est maintenu à 9.10⁻² mbar et les plateaux chauffés à 25°C. Après 6 h 30 de sublimation, la composition globale du persil partiellement lyophilisé est :
. 32,8 % d'eau,
. 34,9 % de matière sèche végétale,
. 21,5 % de chlorure de sodium,
. 10,8 % de saccharose,
et l'activité d'eau (Aw) est de 0,7.

Après homogénéisation le lot est conservé 7 jours en chambre froide à -20°C puis mis 14 jours à + 12°C. Un jury de dégustation juge le goût, l'odeur et la couleur inchangés (selon la norme NF V09-013).

### Exemple n°3 :

100 kg de basilic (à 12 % de matière sèche) sont additionnés à 12 kg d'un mélange saccharose/chlorure de sodium. Le produit après solubilisation et imprégnation des solutés est congelé à -25°C, puis mis à sublimer dans une enceinte de lyophilisateur. Le vide est maintenu à 0,4 mbar et les plateaux chauffés à 20°C. Après 13 h de sublimation, le basilic homogénéisé a une composition de 42,8 % H₂O, 26,4 % matière sèche herbe ; 14,5 % saccharose ; 14,5 % chlorure de sodium et une activité de l'eau de 0,75. La mesure colorimétrique du produit végétal obtenu à l'aide d'un appareil Minolta (CR 310), en coordonnée h° teinte est 128,0 comprise entre 125,5 pour le végétal frais initial et 131 pour le végétal surgelé. Le basilic a bien conservé sa couleur d'origine.

La teneur en huile essentielle par rapport à la matière sèche (M.S.) végétale est de 0,653 ml/100 g de M.S. végétale pour le basilic frais et de 0,570 ml/100 g de M.S. pour le basilic obtenu, soit une conservation de 87 % de l'huile essentielle (les composants essentiels de l'arôme et du goût). De par la déshydratation partielle du végétal, cet arôme est conservé et concentré 10,066 ml pour 100 g de basilic frais et 0,15 ml pour 100 g de basilic obtenu).

## Revendications

1. Procédé de traitement de végétaux fraîchement récoltés, notamment d'herbes ou plantes aromatiques, caractérisé en ce qu'il comprend les étapes consistant à :
a) ajouter et mélanger à des morceaux consommables de végétaux des dépresseurs d'activité d'eau ;
b) congeler le mélange ainsi obtenu ;
c) extraire du mélange une quantité d'eau globale déterminée par sublimation en interrompant le processus en cours de dessiccation primaire ou au tout début de dessiccation secondaire, le mélange étant susceptible de présenter des morceaux de végétaux secs et/ou des morceaux de végétaux encore gelés ou plus ou moins humides ;
d) mélanger, de façon homogène, le mélange de morceaux de végétaux ainsi obtenu pour permettre une migration d'eau des morceaux gelés vers les morceaux plus ou moins humides et/ou vers les morceaux secs ;
e) recueillir les végétaux ainsi obtenus prêts à l'emploi ; leur aspect, leur arôme, leur goût, leur couleur, leur souplesse étant équivalentes ou proches des végétaux frais.

2. Procédé selon la revendication 1, caractérisé en ce qu'on interrompt la sublimation à un temps t déterminé pour que le mélange ait globalement une teneur en eau de 30 à 55 %.

3. Procédé selon la revendication 1 ou 2, caractérisé en ce qu'on congèle préalablement les morceaux consommables de végétaux.

4. Procédé selon l'une quelconque des revendications 1 ou 3, caractérisé en ce que la température d'ajout des dépresseurs d'activité d'eau est comprise entre une température négative et une température basse positive.

5. Procédé selon l'une quelconque des revendications 1 à 4, caractérisé en ce que la température d'ajout des dépresseurs d'activité d'eau est comprise entre -40°C et 30°C, notamment entre -8°C et 10°C.

6. Procédé selon l'une quelconque des revendications 1 à 5, caractérisé en ce qu'on ajoute une quantité de dépresseurs d'activité d'eau de manière à ce que les végétaux obtenus aient une composition comprenant entre 8 % et 55 % d'eau, entre 13 % et 55 % de dépresseurs d'activité d'eau et une activité de l'eau à 20°C comprise entre 0,60 et 0,80, de préférence entre 0,70 et 0,75.

7. Procédé selon la revendication 6, caractérisé en ce qu'on ajoute une quantité de dépresseurs d'activité d'eau de manière à ce que les végétaux obtenus aient une teneur de l'ordre de 8 à 30 % en sels minéraux et/ou une teneur de l'ordre de 5 à 25 % en glucides.

8. Procédé selon l'une quelconque des revendications 1 à 7, caractérisé en ce que les dépresseurs d'activité d'eau sont choisis dans le groupe comprenant : les sels minéraux et notamment le chlorure de sodium, le chlorure de calcium, le chlorure de potassium, le citrate de sodium, les carbonates et sulfates alimentaires ; les mono, di, oligosaccharides et notamment le glucose, le fructose, le saccharose, le lactose, le malrose, les maltodextrines, les sirops de glucose ; les polyols et notamment le sorbitol et le glycérol ; les protéines et les hydrolysats de protéines ; et les acides organiques et/ou leurs sels.

9. Procédé selon l'une quelconque des revendications 1 à 8 caractérisé en ce que les dépresseurs d'activité d'eau sont solides ou liquides.

10. Procédé selon l'une quelconque des revendications 1 à 9, caractérisé en ce que les produits végétaux obtenus ont une teneur en huile essentielle réduite au plus de 30 % par rapport à la matière sèche du produit végétal frais.

11. Procédé selon la revendications 1, caractérisé en ce qu'il est continu.

12. Procédé selon la revendication 1, caractérisé en ce qu'il est discontinu, notamment en ce qu'il comprend une étape de stockage à température inférieure ou égale à -18°C avant l'étape c) de sublimation.

13. Procédé selon l'une quelconque des revendications 1 à 12, caractérisé en ce qu'on ajoute des aromatisants et/ou des amidons et/ou des exhausteurs de goût.

14. Procédé selon l'un quelconque des revendications 1 à 13, caractérisé en ce qu'on blanchit les végétaux.

15. Produit végétal, notamment une herbe ou plante aromatique, auquel ont été ajoutés des dépresseurs d'activité d'eau du type sels minéraux et/ou glucides et lequel a subi, après congélation, une extraction d'eau de manière qu'il présente une activité de l'eau à 20°C, une teneur en sels minéraux, une teneur en glucides et une teneur en humidité se situant dans un intervalle tel que ledit produit conserve les propriétés des végétaux frais ou s'en rapproche, notamment en ce qui concerne sa texture, sa souplesse et ses propriétés organoleptiques et colorimétriques et qu'il puisse être stocké indifféremment à des températures basses positives et négatives.

16. Produit végétal selon la revendication 15, caractérisé en ce que ladite activité de l'eau à 20°C est comprise entre 0,60 et 0,80, de préférence 0,70 et 0,75, ladite teneur en sels minéraux est comprise entre 8 % et 30 %, ladite teneur en glucides est comprise entre 5 % et 25 % et ladite teneur en humidité est comprise entre 8 % et 55 %.

17. Produit végétal selon la revendication 15 ou 16, caractérisé en ce que les dépresseurs d'activité d'eau sont choisis dans le groupe comprenant : les sels minéraux et notamment le chlorure de sodium, le chlorure de calcium, le chlorure de potassium, le citrate de sodium, les carbonates et sulfates alimentaires ; les mono, di, oligosaccharides et notamment le glucose, le fructose, le saccharose, le lactose, le malrose, les maltodextrines, les sirops de glucose ; les polyols et notamment le sorbitol et le glycérol ; les protéines et les hydrolysats de protéines ; et les acides organiques et/ou leurs sels.

18. Produit végétal selon l'une quelconque des revendications 15 à 17, caractérisé en ce que sa teneur en huile essentielle est réduite au plus de 30 % par rapport à la matière sèche du produit végétal frais.

19. Produit végétal selon l'une quelconque des revendications 15 à 18, caractérisé en ce qu'il comprend en outre des aromatisants et/ou des amidons et/ou des exhausteurs de goût.

20. Produit végétal selon l'une quelconque des revendications 15 à 19, caractérisé en ce que sa température de stockage est comprise entre -40°C et 12°C, notamment entre -18°C et 6°C.

## Claims

1. A process for treating freshly harvested vegetables, particularly aromatic herbs or plants, characterised in that it comprises the steps consisting of:
a) adding water activity depressors to consumable pieces of vegetables and mixing the former with the latter;
b) freezing the mixture thus obtained;
c) extracting a predetermined global quantity of water from the mixture by sublimation, stopping the process during primary drying or at the very beginning of secondary drying, the mixture possibly containing dry pieces of vegetables and/or pieces of vegetables still frozen or more or less humid;
d) mixing, in a homogenous manner, the mixture of pieces of vegetables thus obtained to allow water to migrate from the frozen pieces to the more or less humid pieces and/or to the dry pieces;
e) gather the vegetables thus obtained ready for use; their appearance, their flavour, their taste, their colour, their softness being equivalent or close to that of fresh vegetables.

2. A process according to claim 1, characterised in that the sublimation is stopped at a predetermined time t so that the mixture will have a global water content of 0 to 55%.

3. A process according to claim 1 or 2, characterised in that the consumable pieces of vegetables are previously frozen.

4. A process according to any of claims 1 to 3, characterised in that the temperature at which the water activity depressors are added is comprised between a negative temperature and a low positive temperature.

5. A process according to any of claims 1 to 4, characterised in that the temperature at which the water activity depressors are added is comprised between -40°C and 30°C, particularly between -8°C and 10°C.

6. A process according to any of claims 1 to 5, characterised in that a quantity of water activity depressors is added such that the vegetables obtained will have a composition comprising between 8 and 55% of water, between 13 and 55% of water activity depressors and a water activity at 20°C comprised between 0.60 and 0.80, preferably between 0.70 and 0.75.

7. A process according to claim 6, characterised in that a quantity of water activity depressors is added such that the vegetables obtained will have a mineral salt content in the order of 8 to 30% and/or a carbohydrate content in the order of 5 to 25%.

8. A process according to any of claims 1 to 7, characterised in that the water activity depressors are chosen from the group comprising: mineral salts and particularly sodium chloride, calcium chloride, potassium chloride, sodium citrate, alimentary carbonates and sulphates; mono, di and oligosaccharids and particularly glucose, fructose, saccharose, lactose, maltose, maltodextrins, glucose syrups; polyalcohols and particularly sorbitol and glycerol; proteins and protein hydrolyzates; and organic acids and/or their salts.

9. A process according to any of claims 1 to 8, characterised in that the water activity depressors are solid or liquid.

10. A process according to any of claims 1 to 9, characterised in that the vegetable products obtained have an essential oil content reduced by a maximum of 30% with respect to the dry matter of the fresh vegetable product.

11. A process according to claim 1, characterised in that it is continuous.

12. A process according to claim 1, characterised in that it is discontinuous, particularly in that it comprises a storage step at a temperature below or equal to -18°C before the sublimation step c).

13. A process according to any of claims 1 to 12, characterised in that flavourings and/or starches and/or taste exhausters are added.

14. A process according to any of claims 1 to 13, characterised in that the vegetables are blanched.

15. A vegetable product, particularly an aromatic herb or plant, to which water activity depressors of the mineral salt and/or carbohydrate type have been added, and which has been subject, after freezing, to water extraction so that it has water activity at 20°C, a mineral salt content, a carbohydrate content and a humidity content comprised within an interval such that the product preserves the properties of fresh vegetables or stays close to them, particularly as far as its texture, its softness and its organoleptic and colorimetric properties are concerned, and such that it can be stored at both low positive and negative temperatures.

16. A vegetable product according to claim 15, characterised in that said water activity at 20°C is comprised between 0.60 and 0.80, preferably between 0.70 and 0.75, said mineral salt content is comprised between 8 and 30%, said carbohydrate content is comprised between 5 to 25%, and said humidity content is comprised between 8 to 55%.

17. A vegetable product according to claim 15 or 16, characterised in that the water activity depressors are chosen from the group comprising: mineral salts and particularly sodium chloride, calcium chloride, potassium chloride, sodium citrate, alimentary carbonates and sulphates; mono, di and oligosaccharids and particularly glucose, fructose, saccharose, lactose, maltose, maltodextrins, glucose syrups; polyalcohols and particularly sorbitol and glycerol; proteins and protein hydrolyzates; and organic acids and/or their salts.

18. A vegetable product according to any of claims 15 to 17, characterised in that its essential oil content is reduced by a maximum of 30% with respect to the dry matter of the fresh vegetable product.

19. A vegetable product according to any of claims 15 to 18, characterised in that it further comprises flavourings and/or starches and/or taste exhausters.

20. A vegetable product according to any of claims 15 to 19, characterised in that its storage temperature is comprised between -40°C and 12°C, particularly between -18°C and 6°C.

## Patentansprüche

1. Prozeß zur Verarbeitung frisch gepflückter Pflanzen, insbesondere Kräuter und Gewürzpflanzen, dadurch gekennzeichnet, daß er aus folgenden Schritten besteht:
a) Hinzufügen und Mischen von Puffersubstanzen der Wasseraktivität zu verzehrbaren Pflanzenteilen;
b) Tieffrieren der so erhaltene Mischung;
c) Entziehen einer globalen, durch Sublimation bestimmte, Wassermenge von der Mischung, wobei der Prozeß während des primären oder zu Beginn des sekundären Trockenprozesses unterbrochen wird, und wobei die Mischung zu diesem Zeitpunkt trockene und/oder noch gefrorene und mehr oder weniger feuchte Pflanzenteile enthalten vermag;
d) homogenes Mischen der so erhaltenen Pflanzenteile, um einen Übergang von Wasser von den noch gefrorenen in die mehr oder weniger feuchten und/oder trockenen Pflanzenteile zu ermöglichen;
e) Sammeln der so erhaltenen, gebrauchsfertigen Pflanzenteile; ihr Aussehen, ihr Aroma, ihr Geschmack, ihre Farbe und ihre Konsistenz ähneln stark denjenigen frischer Pflanzen.

2. Verfahren nach Anspruch 1, dadurch gekennzeichnet, daß die Sublimation zu einem bestimmten Zeitpunkt t (zu dem der globale Wassergehalt der Mischung zwischen 30 % und 55 % liegen soll) unterbrochen wird.

3. Verfahren nach Anspruch 1 oder 2, dadurch gekennzeichnet, daß die verzehrbaren Pflanzenteile zuvor tiefgefroren werden.

4. Verfahren nach einem der Ansprüche 1 oder 3, dadurch gekennzeichnet, daß die Temperatur, bei der die Puffer der Wasseraktivität hinzugefügt werden, zwischen einer negativen und einer positiven, niedrigen Temperatur liegt.

5. Verfahren nach einem der Ansprüche 1 bis 4, dadurch gekennzeichnet, daß die Temperatur, bei der die Puffer der Wasseraktivität hinzugefügt werden, zwischen-40° C und 30° C, insbesondere zwischen -8° C und 10° C, liegt.

6. Verfahren nach einem der Ansprüche 1 bis 5, dadurch gekennzeichnet, daß eine derartige Menge an Puffersubstanzen der Wasseraktivität hinzugefügt wird, daß die so erhaltenen Pflanzen 8 % bis 55 % Wasser und zwischen 13 % und 55 % Puffersubstanzen der Wasseraktivität enthalten und die Wasseraktivität bei 20°C zwischen 0,60 und 0,80, vorzugsweise zwischen 0,70 und 0,75 liegt.

7. Verfahren nach Anspruch 6, dadurch gekennzeichnet, daß eine derartige Menge an Puffersubstanzen der Wasseraktivität hinzugefügt wird, daß die erhaltenen Pflanzen zwischen 8 % und 30 % Mineralsalze und/oder zwischen 5 % und 25% Kohlehydrate enthalten.

8. Verfahren nach einem der Ansprüche 1 bis 7, dadurch gekennzeichnet, daß die Puffersubstanzen der Wasseraktivität aus der Gruppe der Mineralsalze ausgewählt werden, besonders unter folgenden Substanzen: Natriumchlorid, Kalziumchlorid, Kaliumchlorid, Natriumcitrat, Speisekarbonate und -sulfate, Mono-, Di- und Oligosaccharide - insbesondere Glukose, Fruktose, Saccharose, Laktose, Maltose - Maltose-Dextrine, Glukosesirups, Polyalkohole - besonders Sorbit und Glycerin - Proteine und Proteinhydrolysate sowie organische Säuren und/oder deren Salze.

9. Verfahren nach einem der Ansprüche 1 bis 8, dadurch gekennzeichnet, daß die Puffersubstanzen der Wasseraktivität fest oder flüssig sind.

10. Verfahren nach einem der Ansprüche 1 bis 9, dadurch gekennzeichnet, daß der Gehalt an etherischen ölen der erhaltenen pflanzlichen Produkte höchstens 30 % unter demjenigen der Trockenmasse des frischen pflanzlichen Produktes liegt.

11. Verfahren nach Anspruch 1, dadurch gekennzeichnet, daß es kontinuierlich ist.

12. Verfahren nach Anspruch 1, dadurch gekennzeichnet, daß es nicht kontinuierlich ist und insbesondere vor der Sublimationsphase c) eine Lagerungsphase bei einer Temperatur kleiner oder gleich-18° C enthält.

13. Verfahren nach einem der Ansprüche 1 bis 12, dadurch gekennzeichnet, daß Aromastoffe und/oder Stärken und/oder Geschmacksverstärker hinzugefügt werden.

14. Verfahren nach einem der Ansprüche 1 bis 13, dadurch gekennzeichnet, daß die Pflanzen abgebrüht werden.

15. Pflanzliche Produkte, insbesondere Kräuter oder Gewürzpflanzen, denen Puffer der Wasseraktivität wie Mineralsalze und/oder Kohlehydrate hinzugefügt wurden und denen nach dem Tiefgefrieren Wasser entzogen wurde, so daß Wasseraktivität bei 20° C vorhanden ist und Mineralsalz-, Kohlehydrat- und Feuchtigkeitsgehalt so liegen, daß besagtes Produkt über die Eigenschaften frischer Produkte verfügt oder diesen ähnelt, insbesondere hinsichtlich seiner Struktur, seiner Konsistenz, seiner Geschmackseigenschaften, seiner Farbe und der Tatsache, daß es bei niedrigen, positiven und negativen Temperaturen gelagert werden kann.

16. Pflanzliches Produkt nach Anspruch 15, dadurch gekennzeichnet, daß besagte Wasseraktivität bei 20° C zwischen 0,60 und 0,80 liegt und vorzugsweise zwischen 0,70 und 0,75, besagter Mineralsalzgehalt zwischen 8 % und 30 %, besagter Kohlehydratgehalt zwischen 5 % und 25% und besagter Feuchtigkeitsgehalt zwischen 8 % und 55 %.

17. Pflanzliches Produkt nach Anspruch 15 oder 16, dadurch gekennzeichnet, daß die Puffersubstanzen der Wasseraktivität aus folgender Gruppe gewählt wurden: Mineralsalze - insbesondere Natriumchlorid, Kalziumchlorid, Kaliumchlorid, Natriumcitrat, Speisekarbonate und -sulfate, Mono-, Di- und Oligosaccharide - insbesondere Glukose, Fruktose, Saccharose, Laktose, Maltose - Maltose-Dextrine, Glukosesirups, Polalkohole - besonders Sorbit und Glycerin - Proteine und Proteinhydrolysate sowie organische Säuren und/oder deren Salze.

18. Pflanzliches Produkt nach einem der Ansprüche 15 bis 17, dadurch gekennzeichnet, daß sein Gehalt an etherischen Ölen höchstens um 30 % unter demjenigen der Trockenmasse des frischen Pflanzenprodukts liegt.

19. Pflanzliches Produkt nach einem der Ansprüche 15 bis 18, dadurch gekennzeichnet, daß es außerdem Aromastoffe und/oder Stärken und/oder Geschmacksverstärker enthält.

20. Pflanzliches Produkt nach einem der Ansprüche 15 bis 19, dadurch gekennzeichnet, daß seine Lagertemperatur zwischen - 40° C und 12° C, insbesondere zwischen - 18° C und 6° C liegt.
